# EUROPÄISCHE PATENTSCHRIFT

(11) **EP 3 743 389 B1**
(45) Veröffentlichungstag und Bekanntmachung des Hinweises auf die Patenterteilung: **15.06.2022**
(21) Anmeldenummer: 19702224.7
(22) Anmeldetag: 24.01.2019
(51) Int. Cl.: C03B 23/11

(54) **HEISSFORMGEBUNGSVORRICHTUNG ZUR HERSTELLUNG VON GLASBEHÄLTNISSEN AUS EINEM GLASROHR**
HOT-FORMING DEVICE FOR PRODUCING GLASS CONTAINERS FROM A GLASS TUBE
DISPOSITIF DE MISE EN FORME À CHAUD POUR LA FABRICATION DE CONTENANTS EN VERRE À PARTIR D'UN TUBE EN VERRE

(30) Priorität: 26.01.2018 DE 102018101840
(43) Veröffentlichungstag der Anmeldung: 02.12.2020
(73) Patentinhaber: SCHOTT AG, 55122 Mainz (DE)
(72) Erfinder: STUDERUS, Diego, 9323 Steinach (CH); FRUHNER, Oliver, 55118 Mainz (DE); GROH, Andreas, 55276 Dienheim (DE)
(74) Vertreter: Ullrich & Naumann PartG mbB
(86) Internationale Anmeldenummer: PCT/EP2019/051699
(87) Internationale Veröffentlichungsnummer: WO 2019/145392

(56) Entgegenhaltungen:
- WO-A1-00/39037

## Beschreibung

### Gebiet der Erfindung

Die vorliegende Erfindung betrifft allgemein eine Vorrichtung zur Herstellung von Glasbehältnissen und betrifft insbesondere eine Heißformgebungsvorrichtung zur Herstellung von Glasbehältnissen aus einem Glasrohr, insbesondere zur Verwendung als Primär-Packmittel für pharmazeutische Wirkstoffe, beispielsweise als Glasfläschchen (Vials), Karpulen oder Spritzenkörper.

### Hintergrund der Erfindung

Eine solche Heißformgebungsvorrichtung ist aus der DE 103 41 300 B3 bekannt und dient, wie auch die Heißformgebungsvorrichtung gemäß der vorliegenden Erfindung, zur Herstellung von Glasbehältnissen aus einem Glasrohr, insbesondere zur Verwendung als Primär-Packmittel für pharmazeutische Wirkstoffe, beispielsweise als Glasfläschchen (Vials), Karpulen oder Spritzenkörper.

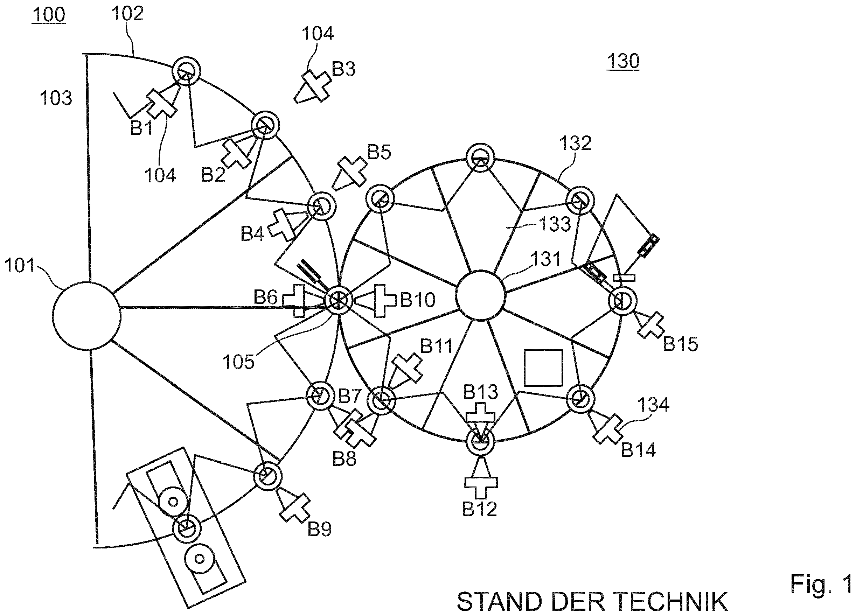

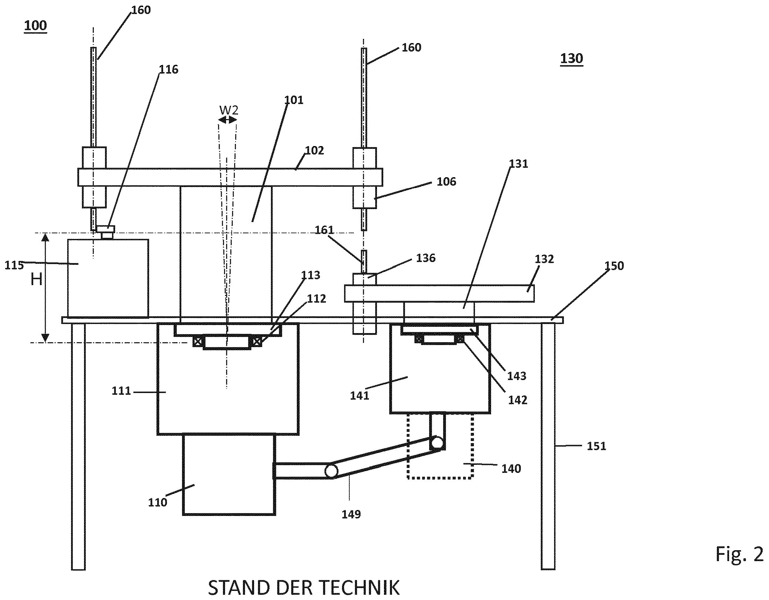

Eine solche vertikal ausgerichtete Heißformgebungsvorrichtung ist in einer schematischen Draufsicht und in einer seitlichen Schnittansicht in den Figuren 1 und 2 gezeigt und weist zwei Drehtische 102, 132 auf, die jeweils schrittweise um einen zugeordneten Drehturm 101, 131 gedreht werden, um eine Serie von Bearbeitungsstationen B1 bis B15 zur Bearbeitung und Heißformgebung zu durchlaufen. Die Anzahl und Anordnung der Bearbeitungsstationen können je nach zu fertigendem Produkt variieren. Über den Umfang der Drehtische 102, 132 sind jeweils mehrere Haltefutter 106, 136 zum Halten von Werkstücken, also von Glasrohrabschnitten 160, 161, verteilt angeordnet. Die Drehtürme 101, 131 werden jeweils von einer Kombination aus Elektromotor 110, 140 und Getriebe 111, 141 angetrieben. Das jeweilige Getriebe 111, 141 und der zugeordnete Motor 110, 140 sind unterhalb der Arbeitsebene (Arbeitsplatte) 150 montiert. Auf der Arbeitsplatte 150 sind die Werkzeuge 116 und Wärmequellen, wie beispielsweise Gasbrenner 104, 134, zur Umformung montiert. Ein Drehturm, bestehend aus einer mitrotierenden Drehsäule und einem darauf montierten Drehkranz 102, 132, welcher die Haltefutter 116, 136 für das Glasrohr 160 oder für das halbfertige Glasprodukt 161 aufnimmt, ist auf der Ausgangsseite des Getriebes 111, 141 montiert. Im Arbeitsmodus schwenken die Drehtürme von Arbeitsposition zu Arbeitsposition (B1, ... B15) und sind bei der Übergabe vom Haupt- zum Nebenturm zur Produktübergabe synchronisiert.

Bei der getakteten Drehbewegung müssen jeweils vergleichsweise große Massen beschleunigt und wieder abgebremst werden. Aufgrund der auftretenden sehr hohen Kräfte insbesondere bei hohen Taktraten, kann dies zu einer Beeinträchtigung der Produktqualität führen. So können insbesondere bei hohen Taktraten Schwingungen zwischen den Bearbeitungswerkzeugen und den zu bearbeitenden Werkstücken (Glasrohrabschnitt) auftreten, die die Produktqualität beeinträchtigen.

Weil der die Werkstücke haltende Drehkranz und der Antriebsmotor indirekt über ein Getriebe miteinander gekoppelt sind, ist ein gewisses Spiel im Antriebsstrang der Heißformgebungsvorrichtung unausweichlich, was sich insbesondere in einem Winkelspiel W2 zwischen der Achse des Glasrohrs 160 und dem Werkzeug 115 ausdrückt, sowie zu einem Winkelspiel und Achsversatz zwischen den Haltefuttern 106 und 136 führt. Dieses Spiel reduziert nicht nur die erreichbare Produktqualität, sondern erhöht auch den Verschleiß, insbesondere bei vergleichsweise hohen Taktraten.

Vergleichbare Heißformgebungsvorrichtungen der vorgenannten Art sind in DE 20 2004 004 560 U1, WO 2005/092805 A1 und EP 2 818 454 A1 offenbart. In der WO 2005/092805 A1 wird zum Beispiel vorgeschlagen, die abweichende Position des Glasrohrs bzw. des Container-Vorproduktes von der Sollposition, an welcher das Bearbeitungswerkzeug positioniert ist, zu kompensieren, in dem die Bearbeitungswerkzeuge in der Tischebene auf einem Kreuztisch verfahrbar angeordnet sind.

Im Hinblick auf die weiter steigenden Anforderungen an die Produktqualität von Glasbehältnissen zur Verwendung als Primär-Packmittel für pharmazeutische Wirkstoffe besteht somit weiterer Verbesserungsbedarf.

WO 0039037 A1 offenbart eine Heißformgebungsvorrichtung zur Herstellung von Glasbehältnissen aus einem Glasrohr gemäß dem Oberbegriff des Anspruchs 1, mit einem Drehtisch, an dessen unterem Ende der Rotor direkt vorgesehen ist, wobei der Rotor dem Stator direkt gegenüberliegt und wobei der Stator an der Basis befestigt ist. Allerdings muss ein relativ großer Abstand zwischen dem Drehtisch und der Basis und somit auch zu den zugeordneten Lagerbereichen eingehalten sein, insbesondere um Probleme mit den relativ hohen Temperaturen in der eigentlichen Bearbeitungszone zu vermeiden.

EP 2165983 A1 offenbart eine Glasmaschine zur Herstellung von Glasprodukten, wie beispielsweise Flaschen oder Trinkgläser, aus einer Glasschmelze. Offenbart wird der Einsatz eines Elektromotors mit einer hohen Polpaaranzahl. Der Elektromotor ist jedoch über ein Getriebe mit dem Drehtisch gekoppelt und somit weit beabstandet zum Bereich des Bearbeitungsprozesses.

DE 202008017806 U1 offenbart eine Glasmaschine vergleichbar zu der in EP 2165983 A1 offenbarten Glasmaschine.

### Zusammenfassung der Erfindung

Es ist eine Aufgabe der vorliegenden Erfindung, eine verbesserte Heißformgebungsvorrichtung zur Herstellung von Glasbehältnissen aus Glasrohren bereitzustellen, womit sich Glasbehältnisse mit gleichbleibend hoher Qualität auch mit sehr hohen Taktraten zuverlässig und effizient herstellen lassen.

Diese Aufgabe wird durch eine Heißformgebungsvorrichtung zur Herstellung von Glasbehältnissen aus Glasrohren nach Anspruch 1 gelöst. Weitere vorteilhafte Ausführungsformen sind Gegenstand der rückbezogenen Unteransprüche.

Gemäß der vorliegenden Erfindung wird eine Heißformgebungsvorrichtung zur Herstellung von Glasbehältnissen aus einem Glasrohr bereitgestellt, mit einem Drehtisch, der drehbeweglich an einem zugeordneten Maschinengestell-Abschnitt gelagert ist, wobei über den Umfang des Drehtisches mehrere Haltefutter zum Halten von Werkstücken verteilt angeordnet sind, und wobei der Drehtische mit einem Antriebsmotor gekoppelt ist, um eine Drehbewegung der Drehtische anzutreiben. Dabei ist der Antriebsmotor als Direktantrieb ausgebildet, sodass der Drehtisch mit dem zugeordneten Maschinengestell-Abschnitt direkt und ohne Zwischenschaltung eines Getriebes verbunden ist.

Erfindungsgemäß ist der zugeordnete Maschinengestell-Abschnitt als Träger ausgebildet, der feststehend auf einem Arbeitstisch angeordnet ist, wobei der Stator des Direktantriebs im oberen Bereich des zugeordneten Trägers angeordnet ist und wobei der Rotor des Direktantriebs an dem Drehtisch vorgesehen ist.

Zur Minimierung eines Spiels ist der Direktantrieb dabei möglichst nahe zur eigentlichen Bearbeitungsebene angeordnet, in der das Glasrohr bzw. halbfertige Zwischenprodukt während seiner Bearbeitung und Heißformgebung positioniert ist. Dabei ist der Direktantrieb oberhalb einer Arbeitsplatte angeordnet, wobei der Maschinengestell-Abschnitt als Träger ausgebildet ist, der sich senkrecht zu der Arbeitsplatte bzw. einem Arbeitstisch erstreckt und einer Abstützung des Stators sowie des Drehtisches dient, weil so der Abstand zwischen dem Direktantrieb bzw. der dem Direktantrieb zugeordneten Drehlagerung, die zur drehbeweglichen Lagerung des Drehtisches dient, und der eigentlichen Bearbeitungsebene minimiert werden kann, was in einem reduzierten Spiel, geringeren Verschleiß und somit in einer höheren Bearbeitungsgenauigkeit resultiert.

Insgesamt ist der Direktantrieb dabei erfindungsgemäß zwischen dem Maschinengestell-Abschnitt und dem Drehtisch angeordnet, was die rotierende Masse erheblich reduziert, aufgrund der Geometrie den winkligen Achsversatz zwischen Werkzeug und Werkstück bzw. Glasrohr oder halbfertigem Zwischenprodukt sowie die Neigung zur Spielvergrößerung durch Abnutzung eines Lagers reduziert und letztendlich die Positioniergenauigkeit durch einen größeren Wirkduchmesser am Motor und den Entfall des Getriebes erhöht. Somit können erfindungsgemäß Glasbehältnisse mit gleichbleibend hoher Qualität auch bei sehr hohen Taktraten zuverlässig und effizient hergestellt werden. Insbesondere die reduzierte bewegte Masse führt zu einer höheren Genauigkeit bei der Bearbeitung und Heißumformung der Glasbehältnisse und somit zu einer höheren Produktionsausbeute.

Direktantriebe stellen bekanntermaßen Antriebe dar, bei denen die elektrische Maschine und die Arbeitsmaschine direkt miteinander verbunden sind. Der Elektromotor ist dabei so ausgelegt, dass er direkt die Drehzahl der Arbeitsmaschine hat, sodass auf ein zwischengeschaltetes Getriebe verzichtet werden kann. Der Maschinengestell-Abschnitt, beispielsweise ausgebildet als feststehende Säule, bildet in diesem Falle den Stator, während der bewegliche Drehtisch axial gelagert wird und den Rotor bildet. Durch eine hohe Polpaaranzahl des Elektromotors kann bei bestehender Strom-Einspeisungsfrequenz die Drehzahl deutlich gesenkt werden, was sich insbesondere in einem hohen Drehmoment insbesondere zu Beginn des Verschwenkens des Drehtisches ausdrückt.

Der vorgenannte Träger dient dabei im Wesentlichen einer geeigneten Abstützung und Lagerung des Stators des Direktantriebs und kann hierzu grundsätzlich ein beliebiges Profil haben, beispielsweise als Träger mit einem rechteckigen oder quadratischen Querschnitt ausgebildet sein, und sich senkrecht zu dem Arbeitstisch bzw. zu der Arbeitsplatte erstrecken. Gemäß einer bevorzugten weiteren Ausführungsform kann der Träger insbesondere als Säule mit einem kreisrunden Querschnitt ausgebildet sein, weil so die Abstände zwischen Träger bzw. Drehlager und dem daran gelagerten Drehtisch noch weiter minimiert werden können.

Gemäß einer weiteren Ausführungsform umfasst der Direktantrieb einen Torquemotor mit einer hohen Polpaaranzahl, die zweckmäßig größer als zwanzig ist und beispielsweise für den Drehtisch einer Muttermaschine dreiunddreißig oder vierundvierzig beträgt und für den Drehtisch einer Bodenmaschine dreiunddreißig oder zweiundzwanzig betragen kann. Ein Torquemotor kann vereinfacht als ein auf hohe Drehmomente optimierter, großer Servomotor mit Hohlwelle betrachtet werden. Torquemotoren sind üblicherweise bürstenlose Gleichstrommotoren, teilweise werden aber auch geschaltete Reluktanzmotoren als Torquemotor bezeichnet. Mit anderen Worten ist ein Torquemotor im Sinne der vorliegenden Erfindung ein umgangssprachlich häufig auch als langsam laufender oder momentenstarker bezeichneter Antrieb. Torquemotoren im Sinne der vorliegenden Erfindung können als Außenläufer (Stator innen, Rotor ("Läufer") außen) oder als herkömmliche Innenläufer (Rotor innen, Stator außen) ausgebildet sein. Außenläufer können dabei bei gleicher Baugröße ein größeres Drehmoment zur Verfügung stellen.

Ein Torquemotor zeichnet sich insbesondere durch ein gesteigertes Drehmoment aus, das vor allem aus der relativ hohen Polpaarzahl und den daraus resultierenden kurzen Wegen für den magnetischen Rückschluss resultiert, woraus geringe Leiterverluste und ein tiefes Verhältnis von Masse zu Drehmoment resultieren. Außerdem können Torquemotoren in einfacher Weise mit einem relativ großen Durchmesser hergestellt werden. Das große Antriebsmoment von Torquemotoren ermöglicht dabei große Beschleunigungen und eine hohe Dynamik des Systems. Torquemotoren haben eine höhere Antriebssteifigkeit als Motor-Getriebe-Einheiten gemäß dem Stand der Technik und kein Verdrehspiel. Sie ermöglichen insbesondere auch bessere Regeleigenschaften durch verringerte Störgrößen und eine erhöhte Wiederholgenauigkeit. Torquemotoren sind durch den Wegfall mechanischer Elemente geräusch- und wartungsarm. In einem Torquemotor kommt es praktisch zu keinem Verschleiß.

Weil der Stator des Direktantriebs oder Torquemotors an dem zugeordneten Maschinengestell-Abschnitt insbesondere im oberen Bereich einer zugeordneten Säule angeordnet ist, kann der Abstand zwischen dem Torquemotor und dem eigentlichen Bearbeitungsbereich vorteilhaft reduziert werden, was eine höhere Bearbeitungsgenauigkeit ermöglicht bei gleichzeitig reduzierter bewegter Masse.

Erfindungsgemäß ist der zugeordnete Maschinengestell-Abschnitt als Träger wie vorstehend ausgeführt, insbesondere als Säule, ausgebildet, der feststehend auf dem Arbeitstisch angeordnet ist, wobei der Stator des Direktantriebs oder Torquemotors im oberen Bereich des zugeordneten Trägers bzw. der zugeordneten Säule angeordnet ist. Der Träger bzw. die Säule ermöglicht an den einzelnen Bearbeitungsstationen entlang der Bewegungsbahn des Drehtisches den Zugang zu dem zu bearbeitenden Glasrohr nicht nur von radial außerhalb des Drehtisches, sondern auch von Bereichen, die, in Draufsicht betrachtet, mit dem Drehtisch überlappen.

Weil der zugeordnete Träger bzw. die zugeordnete Säule feststehend bzw. drehstarr auf einem Arbeitstisch bzw. oberhalb von diesem angeordnet, kann der Aufbau ausreichend dynamisch steif ausgelegt werden, um die beim Schwenken des Drehtisches vorherrschenden Antriebskräfte aufnehmen zu können. Hierzu ist der Träger bzw. die Säule zweckmäßig relativ kurz ausgebildet, sodass der Abstand des Drehlagers zu einer Arbeitsebene zwischen dem Glasrohr bzw. einem halbfertigen Zwischenprodukt nach Abtrennung von dem Glasrohr und einem Bearbeitungswerkzeug relativ gering sein kann und das Drehlager insbesondere auf einer Trennebene zwischen Glasrohr und davon abgetrenntem halbfertigen Zwischenprodukt angeordnet sein kann.

Gemäß einer weiteren Ausführungsform ist ein Rotor des jeweiligen Torquemotors bevorzugt unmittelbar an dem Drehtisch vorgesehen. Somit wird das Drehmoment nur über wenige Komponenten mit wenig bewegter Masse und maximaler Steifigkeit der Konstruktion übertragen, was höhere Frequenzen in der getakteten Schwenkung erlaubt, sodass mehr Produkte pro Zeiteinheit produziert werden können. Ferner nimmt die Neigung zu Schwingungen zwischen dem rotierenden Drehtisch und dem Maschinengestell stark ab, weil das Massenverhältnis des Aufbaus viel günstiger wird.

Gemäß einer weiteren Ausführungsform ist der Rotor des jeweiligen Torquemotors als Fortsatz mit geeignetem Profil korrespondierend zum Profil des vorgenannten Trägers bzw. der Säule ausgebildet, insbesondere als zylindrischer oder polyedrischer Fortsatz, wobei der Fortsatz senkrecht von einer Unterseite des jeweiligen Drehtisches vorsteht und in den oberen Bereich des zugeordneten Trägers, insbesondere der zugeordneten Säule, hineinragt. Diese Anordnung ermöglicht eine noch höhere Steifigkeit der Antriebsanordnung und somit eine höhere Produktqualität auch bei vergleichsweise hohen Taktraten bei der Heißumformung.

Gemäß einer weiteren Ausführungsform ist der Stator des jeweiligen Torquemotors unmittelbar in einer Umfangsaussparung im oberen Bereich des zugeordneten Trägers, insbesondere der zugeordneten Säule, angeordnet, bzw. sind die Pole des Stators in mehreren Aussparungen im oberen Bereich des zugeordneten Trägers, insbesondere der zugeordneten Säule, angeordnet. Der Stator ist somit raumsparend direkt mit dem zugeordneten Träger, insbesondere mit der zugeordneten Säule, verbunden, was eine noch höhere Steifigkeit der Antriebsanordnung ermöglicht.

Insgesamt ist die Lagerung zur Rotation des Drehtisches direkt oder über wenige zusätzliche Anbauteile am Drehtisch angebaut, sodass der Rotor mitsamt dem Drehtisch sicher in vertikaler und axialer Position gehalten werden kann und schnelle Schwenkbewegungen möglich sind. Der Lagerdurchmesser kann grundsätzlich frei gewählt werden und ist nur limitiert durch den Durchmesser des Trägers, insbesondere der Säule, und den Teilkreis der Haltefutter auf dem Drehtisch. Der Lagerdurchmesser kann erfindungsgemäß im Vergleich zu herkömmlichen Motor-Getriebe-Anordnungen groß gewählt werden, was einen kleinen Abstand zu den Haltefuttern der Glasrohre oder halbfertigen Zwischenprodukten ermöglicht. Ein großer Lagerdurchmesser reduziert erfindungsgemäß die spezifische Belastung am Drehlager und somit die Neigung zur Vergrößerung eines Spiels, was eine hohe Genauigkeit über eine sehr lange Laufzeit ermöglicht.

Gemäß einer weiteren Ausführungsform ist das Drehlager unter einem geringen Abstand zu einer Arbeitsebene zwischen Glasrohr bzw. einem halbfertigen Zwischenprodukt nach Abtrennung von dem Glasrohr und einem Bearbeitungswerkzeug angeordnet oder ist das Drehlager auf einer Trennebene zwischen Glasrohr und davon abgetrenntem halbfertigen Zwischenprodukt angeordnet, wobei der Abstand beispielsweise maximal von der Größenordnung einer axialen Länge eines herzustellenden Glasbehältnisses sein kann. Der vertikale Abstand des Drehlagers zu einer Arbeitsebene des jeweiligen Drehtischs kann maximal 40 cm betragen, kann bevorzugter maximal 20 cm betragen und kann noch bevorzugter im Bereich zwischen 3 cm und 15 cm liegen. So können Kippmomente, die die Präzision bei der Bearbeitung oder Heißumformung beeinträchtigen, wirkungsvoll reduziert werden.

Gemäß einer weiteren Ausführungsform ist dem jeweiligen Antriebsmotor ein Sensor zum Erfassen einer Drehstellung bzw. Position des zugeordneten Drehtisches zugeordnet. Dies ermöglicht eine genaue Kontrolle der Winkelposition der Motorwelle sowie der Drehgeschwindigkeit und Beschleunigung, was eine noch höhere Genauigkeit bei der Bearbeitung und Heißumformung ermöglicht.

Gemäß einer weiteren Ausführungsform ist der Sensor im Bereich des Drehlagers des zugeordneten Maschinengestell-Abschnitts angeordnet. Aufgrund des geringen Abstands zwischen Sensor und Drehlager kann ein integriertes, hochauflösendes Mess-System realisiert werden, das im Bereich der Lagerung des Drehtisches die Winkelbewegung exakt misst und einen Regelkreis ermöglicht, um die Winkelpositioniergenauigkeit des jeweiligen Drehtisches noch weiter zu optimieren.

Gemäß einer weiteren Ausführungsform ist dem Sensor eine Regelschaltung zugeordnet, die eine von dem Sensor erfasste Drehstellung des zugeordneten Drehtisches weiterverarbeitet und eine Bewegung des jeweiligen Antriebsmotors in Entsprechung zu zumindest einem einstellbaren Sollwert regelt, wobei der zumindest eine einstellbare Sollwert bevorzugt in einer Nachschlagetabelle gespeichert ist, die mit der Regelschaltung verbunden ist. Der Regelkreis ist bevorzugt geschlossen betrieben und kann momenten-, geschwindigkeits- oder positionsgeregelt sein.

Gemäß einer weiteren Ausführungsform führt der Drehtisch schrittweise Drehbewegungen mit einer konstanten Taktrate aus, wobei das Verhältnis einer Zeit zum Schwenken des Drehtisches zu einer neuen Arbeitsposition und einer Stillstandszeit, während der der Drehtisch an der neuen Arbeitsposition verbleibt, bevorzugt variabel einstellbar ist, weil die Antriebsmotoren als Direktantrieb ausgebildet sind und der jeweilige Drehtisch mit dem zugeordneten Träger, insbesondere mit der zugeordneten Säule, direkt und ohne Zwischenschaltung eines Getriebes verbunden ist. Im Gegensatz dazu haben herkömmliche Antriebssysteme, insbesondere Antriebssysteme mit Schrittschaltgetriebe, stets ein fixes Verhältnis (Z/S=const) im Getriebe eingebaut. Diese Variabilität ermöglicht erfindungsgemäß auch bei sehr hohen Taktraten eine ausreichend lange Stillstandszeit, welche notwendig ist, um das Glasrohr bzw. halbfertige Zwischenprodukt weiter zu bearbeiten oder umzuformen.

Gemäß einer weiteren Ausführungsform weist die Heißformgebungsvorrichtung zumindest einen zweiten Drehtisch auf, der mit einem Antriebsmotor gekoppelt, der insbesondere in der vorstehend beschriebenen Weise ebenfalls als Direktantrieb ausgebildet sein kann. Dabei führen die Drehtische schrittweise Drehbewegungen um die zugeordneten Drehachsen mit einer konstanten Taktrate aus, wobei das Verhältnis einer Zeit (Z) zum Schwenken der Drehtische zu einer neuen Arbeitsposition und einer Stillstandszeit (S), während die Drehtische an der neuen Arbeitsposition bei der Bearbeitung / Heißumformung verbleiben, bevorzugt variabel ist.

Gemäß einer weiteren Ausführungsform überschneiden sich Bewegungsbahnen des ersten Drehtisches und des zweiten Drehtisches an einer Stelle, an der die Übergabe eines Werkstückes von einem Haltefutter des ersten Drehtisches an ein Haltefutter des zweiten Drehtisches erfolgt, wobei an diskreten Arbeitspositionen entlang den Bewegungsbahnen des ersten und zweiten Drehtisches Bearbeitungswerkzeuge und Gasbrenner zur Bearbeitung und Heißformgebung der Glasbehältnisse angeordnet sind.

Gemäß einer weiteren Ausführungsform sind die die zugeordneten Maschinengestell-Abschnitte als Träger, wie vorstehend ausgeführt, insbesondere als Säulen, ausgebildet, die seitlich versetzt zueinander angeordnet sind, beispielsweise auf einem Maschinentisch, wobei in einer Umfangsaussparung im oberen Bereich des zugeordneten Trägers, insbesondere der zugeordneten Säule, ein Drehlager vorgesehen ist. Diese Anordnung ermöglicht, dass sowohl das zu bearbeitende Glasrohr in der sog. Muttermaschine als auch das halbfertige Zwischenprodukt in der sog. Bodenmaschine der Heißformgebungsvorrichtung während der Bearbeitung und Heißumformung unter einem geringen Abstand zu den Lagern und Antrieben des zugeordneten Trägers, insbesondere der zugeordneten Säule, angeordnet werden kann, was ein etwaiges Spiel weiter verringern hilft und zu einer vorteilhaft hohen Steifigkeit der Antriebsanordnung beiträgt.

Gemäß einer weiteren Ausführungsform sind die Antriebsmotoren koaxial zum zugeordneten Träger, insbesondere zur zugeordneten Säule, angeordnet, wobei die Träger bzw. Säulen auf unterschiedlichen Höhenniveaus und somit teilweise überlappend angeordnet sind. Die Träger bzw. Säulen können dabei auf nebeneinander aber auf unterschiedlichen Höhenniveaus angeordneten Maschinentischen angeordnet sein. Eine Anordnung der Träger bzw. Säulen auf unterschiedlichen Höhenniveaus kann auch dadurch realisiert werden, dass sich das obere Ende des dem zweiten Drehtisch zugeordneten Trägers, insbesondere der zugeordneten Säule, durch eine Öffnung in einem Arbeitstisch erstreckt, auf der der dem ersten Drehtisch zugeordnete Träger, insbesondere die zugeordnete Säule, feststehend angeordnet ist. Die Bearbeitungsebene des zweiten Drehtisches kann so unterhalb der Bearbeitungsebene des ersten Drehtisches angeordnet sein, was vorteilhaft dazu beiträgt, den Abstand des zu bearbeitenden Glasrohrs bzw. des halbfertigen Zwischenprodukts zu den Lagern und Antrieben des zugeordneten Trägers , insbesondere der zugeordneten Säule, weiter zu verringern.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: in einer schematischen Draufsicht Teile einer Heißformgebungsvorrichtung nach dem Stand der Technik;
- Fig. 2: die Heißformgebungsvorrichtung gemäß der Fig. 1 in einer schematischen seitlichen Schnittansicht;
- Fig. 3: eine Heißformgebungsvorrichtung gemäß der vorliegenden Erfindung in einer schematischen seitlichen Schnittansicht;
- Fig. 4: einer schematischen Draufsicht Teile der Heißformgebungsvorrichtung gemäß der Fig. 3;
- Fig. 5: in einer vergleichenden Gegenüberstellung eine Verstellkurve einer Heißformgebungsvorrichtung gemäß der vorliegenden Erfindung und eine Verstellkurve einer Heißformgebungsvorrichtung gemäß dem Stand der Technik;
- Fig. 6: in einer vergleichenden Gegenüberstellung eine Verstellkurve einer Heißformgebungsvorrichtung gemäß der vorliegenden Erfindung und eine Verstellkurve einer Heißformgebungsvorrichtung gemäß dem Stand der Technik; und
- Fig. 7: in einer schematischen Darstellung einen Regelkreis zur Erhöhung der Winkelpositioniergenauigkeit in einer Heißformgebungsvorrichtung gemäß der vorliegenden Erfindung.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

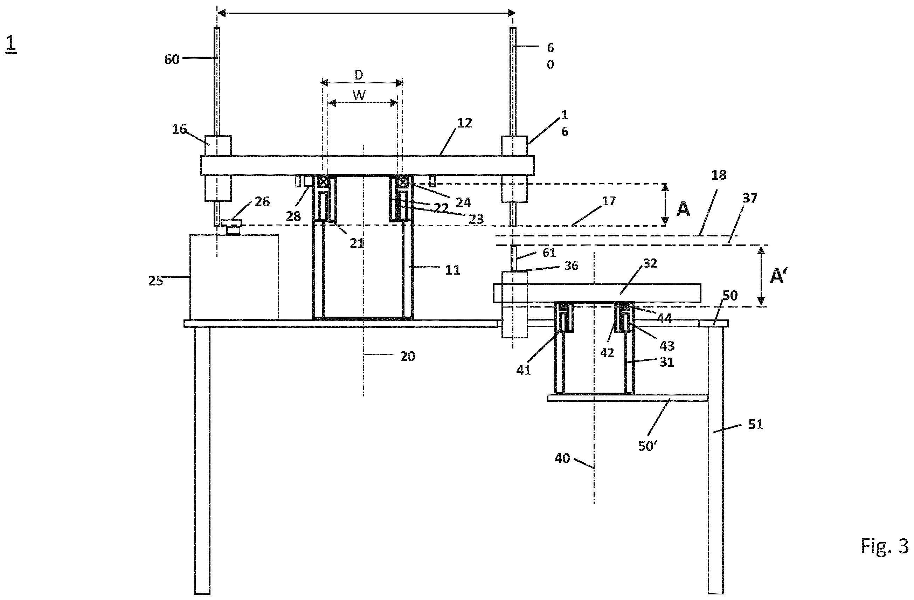

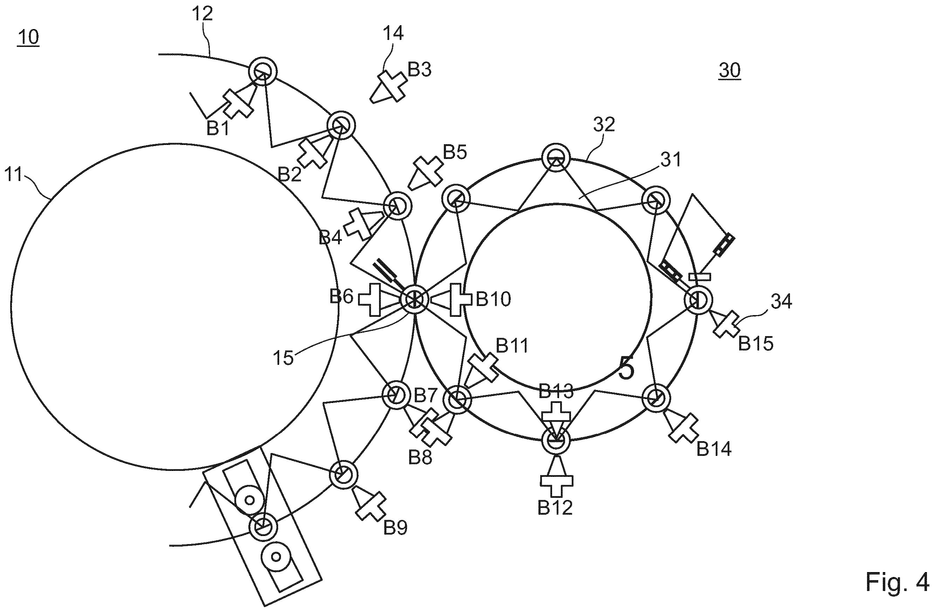

Die in den Figuren 3 und 4 gezeigte Heißformgebungsvorrichtung 1 dient der Herstellung von Glasbehältnissen aus einem Glasrohr 60, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung von pharmazeutischen Wirkstoffen. Die Heißformgebungsvorrichtung 1 umfasst dabei eine sog. Muttermaschine 10, die insbesondere einer Heißumformung des zugeführten Glasrohrs 60 an einem dem späteren Boden oder offenen Ende des Glasbehältnisses gegenüberliegenden Ende dient, und eine sog. Bodenmaschine 30, die der Muttermaschine 10 nachgeordnet ist und insbesondere der Formung des Bodens oder des offenen Endes des Glasbehältnisses dient. Hierzu umfasst die Heißformgebungsvorrichtung 1 zwei seitlich versetzt zueinander angeordnete Drehtische 12, 32. Es sei jedoch ausdrücklich darauf hingewiesen, dass das Antriebskonzept gemäß der vorliegenden Erfindung selbstverständlich auch dann anwendbar ist, wenn nur ein Drehtisch vorgesehen ist. Die Anzahl der Drehtische und deren geometrische Anordnung richtet sich allgemein nach dem zu fertigenden Produkt.

Das zugeführte Glasrohr 60 bzw. die halbfertigen Zwischenprodukte werden in Haltefuttern 16, 36 auf einer geeigneten Bearbeitungshöhe gehalten, die über den Umfang der Drehtische 12, 32 verteilt angeordnet sind. Die Drehtische 12, 32 sind mit Haltefuttern 16, 36 ausgebildet und sind an den zugeordneten Abschnitten 11, 31 eines Montagegestells bzw. Arbeitstisches 50 drehbeweglich gelagert. Im vorliegenden Fall sind die zugeordneten Abschnitte 11, 31 des Montagegestells bzw. Arbeitstisches 50 als Säulen 11, 31 ausgebildet. Grundsätzlich können die Säulen 11, 31 als Träger, wie vorstehend ausgeführt, mit geeignetem Profil ausgebildet sein, die sich senkrecht zum zugeordneten Arbeitstisch 50 erstrecken und einer geeigneten Drehlagerung der Drehtische 12, 32 unter einem geeigneten Abstand zum zugeordneten Arbeitstisch 50 dienen.

Die Drehtische 12, 32 werden schrittweise um die zugeordneten Träger bzw. Säulen 11, 31 gedreht bzw. geschwenkt. Dabei werden die an den Haltefuttern 16, 36 gehalten Glasrohre 60 bzw. halbfertigen Zwischenprodukte 61 schrittweise an verschiedenen Bearbeitungsstationen B1 ... B15 vorbeigeführt, an denen während einer jeweiligen Stillstandszeit die Bearbeitung und Heißumformung zu den Glasbehältnissen erfolgt. Diese Bearbeitungsstationen B1 ... B15 umfassen insbesondere Bearbeitungswerkzeuge 26 zur Bearbeitung und Heizeinrichtungen, beispielsweise Gasbrenner 14, 34, wobei ausdrücklich darauf hingewiesen sei, dass die dargestellte Anzahl von Bearbeitungsstationen B1 ... B15 nur beispielhaft ist und die Erfindung nicht beschränken soll. Wie in der Fig. 4 gezeigt, überschneiden sich die Bewegungsbahnen des ersten Drehtisches 12 und des zweiten Drehtisches 32 an einer Übergabeposition 15, an der die Übergabe eines Werkstückes 60 von einem Haltefutter 16 des ersten Drehtisches 12 an ein Haltefutter 36 des zweiten Drehtisches 32 erfolgt. Weitere Einzelheiten eines solchen Aufbaus können beispielsweise der EP 2 818 454 A1 oder der PCT/EP2017/077114 mit Anmeldetag vom 24.10.2017 der Anmelderin entnommen werden, deren Inhalte hiermit im Wege der Bezugnahme ausdrücklich mit aufgenommen seien.

Gemäß der Fig. 3 sind die beiden Träger bzw. Säulen 11, 31 feststehend bzw. drehstarr auf der Oberseite einer Arbeitsplatte 50, 50' angeordnet, die auf einem Gestell 51 aufgeständert ist. Die unteren Enden der Träger bzw. Säulen 11, 31 stehen zweckmäßig nicht über die Unterseite der jeweils zugeordneten Arbeitsplatte 50, 50' vor.

Innerhalb der Träger bzw. Säulen 11, 31 sind Direktantriebe 21, 41 angeordnet, welche die Drehbewegung der Träger bzw. Säulen 11, 31 antreiben. Genauer gesagt sind die Direktantriebe 21, 41 jeweils bevorzugt im Bereich des oberen Endes der jeweiligen Säule 11, 31 angeordnet. Bei der dargestellten Ausführungsform ist der Direktantrieb als Torquemotor 21, 41 mit einer hohen Polpaaranzahl von beispielsweise zumindest zwanzig Polpaaren, bevorzugter von zumindest dreißig Polpaaren ausgebildet. Gemäß der Fig. 3 umfassen die beiden Torquemotoren 21, 41 jeweils einen innenlaufenden Rotor 22, 42, der als zylindrischer oder polyedrischer Fortsatz von vergleichsweise geringer Länge ausgebildet ist, der senkrecht von einer Unterseite des jeweiligen Drehtisches 12, 32 vorsteht und in den oberen Bereich der zugeordneten Säule 11, 31 hineinragt. Dem Rotor 22, 42 liegt ein zugeordneter Stator 23, 43 unmittelbar und unter Ausbildung eines schmalen Luftspalts gegenüber. Der Stator 23, 43 ist im Bereich des oberen Endes der jeweiligen Säule 11, 31 angeordnet und bevorzugt umlaufend in einer Umfangsaussparung (nicht gezeigt) im oberen Bereich der zugeordneten Säule 11, 31 angeordnet. Unter vergleichsweise geringem Abstand oberhalb des jeweiligen Stators 23, 43 sitzt ein Drehlager 24, 44 zur Drehlagerung des Drehtisches 12, 32 an der zugeordneten Säule 11, 31. Die Anordnung der Lager 24, 44 wird zweckmäßig so gewählt, dass einerseits die Anbindung an die Säule 11, 31 möglichst steif ausgeführt werden kann und andererseits ein maximaler Lagerdurchmesser D, möglichst nahe an den Haltefuttern 16, 36, realisiert werden kann. Der vergleichsweise große Lagerdurchmesser D und der daraus resultierende geringe Abstand zu den Haltefuttern 16, 36 trägt vorteilhaft zu einer höheren Bearbeitungsgenauigkeit bei.

Weil der jeweilige Rotor 22, 42 direkt am zugeordneten Drehtisch 12, 32 angebracht ist, wird das Drehmoment nur über wenige Komponenten mit wenig bewegter Masse und maximaler Steifigkeit der Konstruktion übertragen, was erfindungsgemäß sehr hohe Taktraten ermöglicht.

In einem Einführbereich der Muttermaschine 10 werden die Glasrohre 60 zunächst vertikal von oben in die Haltefutter 16 eingeführt und dann auf einem geeigneten Höhenniveau von den Haltefuttern 16 geklemmt, sodass das untere Ende des jeweiligen Glasrohrs 60 auf einer Arbeitsebene 17 angeordnet ist, auf der entlang der Bewegungsbahn des ersten Drehtisches 12 diverse Bearbeitungsstationen B1 ... B9 verteilt angeordnet sind (in der Fig. 4 ist genauer gesagt nur ein Teil dieser Bearbeitungsstationen dargestellt), wobei die abgebildete Anzahl von Bearbeitungsstationen B1 ... B9 nur beispielhaft ist und die Erfindung nicht beschränken soll. In der Arbeitsebene 17, also auf Höhe der Arbeitsebene 17, erfolgt die eigentliche Bearbeitung und/oder Heißumformung eines Glasrohrs 60.

Im Falle der Herstellung von Glasfläschchen (Vials), aber auch von Karpulen (cartridges) oder Spritzenkörpern, sind die Glasrohrabschnitte 60 an der Übergabeposition 15 (vgl. Fig. 4) bereits zu gebrauchsfertigen Medikamentenaustrittsöffnungen mit einem verengten Halsabschnitt und einem verbreiterten Schulterabschnitt umgeformt. Anschließend werden diese Glasrohrabschnitte 60 an der Übergabeposition 15 an die nachgeordnete Bodenmaschine 30 übergeben, in der die weitere Formung der Böden der Glasfläschchen an den weiteren Bearbeitungsstationen B10 ... B15 erfolgt.

Wie man der Fig. 3 entnehmen kann, erstreckt sich das obere Ende der dem zweiten Drehtisch 32 zugeordneten Säule 31 durch eine Öffnung im Arbeitstisch 50 der Muttermaschine 10, auf der die dem ersten Drehtisch 12 zugeordnete Säule 1 feststehend angeordnet ist. Somit ist der Antriebsmotor 41 koaxial zur zugeordneten Säule 31 angeordnet und, in einer Seitenansicht der zugeordneten Säule 11 betrachtet, mit der benachbarten Säule 31 der Muttermaschine 10 teilweise überlappend angeordnet. Die Glasrohre 60 bzw. halbfertigen Zwischenprodukte 61 können an der Übergabeposition 15 somit ohne wesentlichen Höhenversatz übergeben werden.

Wie man der Fig. 3 entnehmen kann, sind die Drehlager 24, 44 unter einem geringen oder verschwindenden Abstand A, A' zu der Arbeitsebene 17, 38 zwischen Glasrohr 60 bzw. dem halbfertigen Zwischenprodukt 61 nach Abtrennung von dem Glasrohr 60 und einem Bearbeitungswerkzeug 26 oder aber auf der Trennebene 18 zwischen Glasrohr 60 und davon abgetrenntem halbfertigem Zwischenprodukt 61 angeordnet, was in Verbindung mit der vergleichsweise hohen Steifigkeit des Aufbaus eine hohe Bearbeitungspräzision ermöglicht. Zweckmäßig ist der vorgenannte Abstand A, A' von der Größenordnung einer axialen Länge eines herzustellenden Glasbehältnisses, bevorzugt kleiner als diese axiale Länge. Der vertikale Abstand des jeweiligen Drehlagers 24, 44 zu der zugeordneten Arbeitsebene 17, 38 des jeweiligen Drehtischs 12, 32 kann beispielsweise maximal 40 cm, bevorzugter maximal 20 cm betragen und noch bevorzugter im Bereich zwischen 3 cm und 15 cm liegen. Der geringe Abstand A, A' verhindert zusätzliche Positionierfehler durch winkelige Achsabweichungen zwischen Glasrohr 60 und Werkzeug 26 oder zwischen Glasrohr 60 und halbfertigem Zwischenprodukt 61.

Wie man dem Vergleich der Figuren 1 und 4 entnehmen kann, können die Säulen 11, 31 erfindungsgemäß grundsätzlich mit einem vergleichsweise großen Durchmesser ausgebildet sein, was zu einer noch höheren Steifigkeit des Aufbaus beiträgt. Der Durchmesser W der Lager 24, 44 kann frei gewählt werden und ist nur limitiert durch den Durchmesser D der jeweiligen Säule 11, 31 und den Teilkreis der Haltefutter 16, 36 auf dem jeweiligen Drehtisch 12, 32. Zweckmäßig wählt man den Lagerdurchmesser W möglichst groß und somit mit möglichst kleinem Abstand zu den Haltefuttern 16, 36 der Glasrohre 60 oder halbfertigen Zwischenprodukte 61. Ein großer Lagerdurchmesser reduziert erfindungsgemäß die spezifische Belastung am Lager 24, 44 und somit die Neigung zur Spielvergrösserung, was eine hohe Genauigkeit über eine sehr lange Betriebszeit ermöglicht.

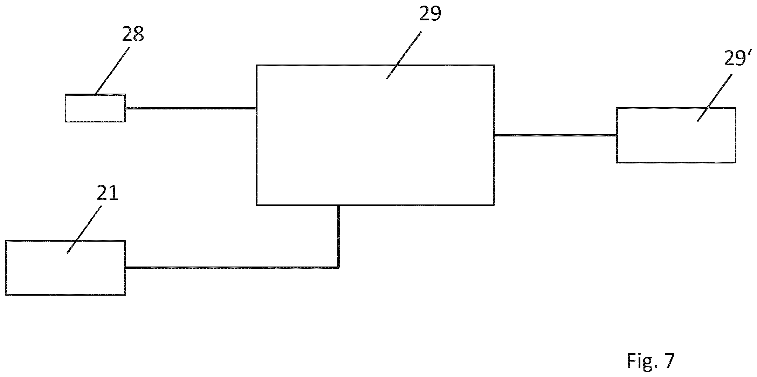

Wie in der Fig. 3 gezeigt, ist auf der Unterseite des ersten Drehtisches 12 ein Sensor 28 zur Bestimmung einer Drehstellung des ersten Drehtisches 12 angeordnet. Ein entsprechender Sensor (nicht gezeigt) kann auch auf der Unterseite des zweiten Drehtisches 32 zur Bestimmung einer Drehstellung des zweiten Drehtisches 32 angeordnet sein. So kann im Bereich des jeweiligen Drehlagers 24, 44 die Winkelbewegung des jeweiligen Drehtisches 12, 32 hochauflösend gemessen werden. Gemäß der Fig. 7 ist der Sensor 28 mit einem Regelkreis 29 verbunden, der eine elektronische Regelung von Drehstellung und/oder Schwenkbewegung des jeweiligen Drehtisches 12, 32 realisiert. Dem Regelkreis 29 ist eine Nachschlagetabelle 29' zugeordnet, in der Sollwerte gespeichert sind. Die elektronische Regelung vergleicht beispielsweise das Signal des Sensors 28 mit einem vorgegebenen Positions-Sollwert. Liegt eine Abweichung vor, so wird der Motor 21 in diejenige Richtung gedreht, die einen geringeren Verfahrweg zum Sollwert sicherstellt. Dies führt dazu, dass sich die Abweichung verringert. Die Prozedur wiederholt sich solange, bis der aktuelle Wert inkrementell oder mittels Approximation innerhalb der Toleranzgrenzen des Sollwerts liegt. Zudem können über dieses Prinzip auch Drehmoment und Geschwindigkeit geregelt werden. Dadurch sind zum Beispiel gleichmäßige Fahrprofile bei schwankenden Lasten möglich. So kann die Genauigkeit der Positionierung der Werkstücke 60, 61 weiter erhöht werden. Dieses Regelprinzip ermöglicht auch eine bessere Positioniergenauigkeit, einen reduzierten Energieaufwand und eine optimierte Stromverlaufskurve der Antriebsmotoren.

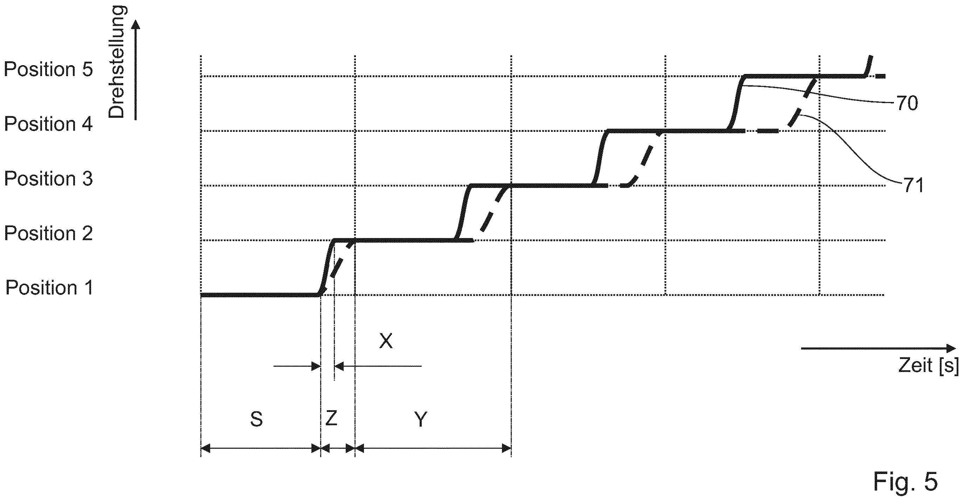

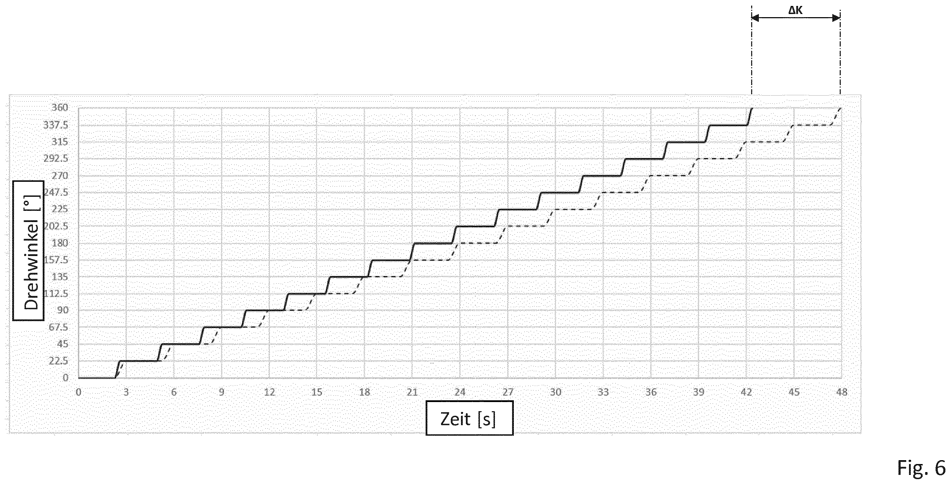

Während herkömmliche Antriebssysteme, insbesondere Antriebssysteme mit Schrittschaltgetriebe, wie vorstehend anhand der Figuren 1 und 2 beschrieben, ein fixes Verhältnis (Z/S=const) im Getriebe zwischen der notwendigen Zeit zum Schwenken (Z) und der Stillstandszeit (S) des jeweiligen Drehtisches für die Bearbeitung bzw. Umformung der Werkstücke eingebaut haben, kann dieses Verhältnis erfindungsgemäß grundsätzlich auch variabel eingestellt werden, insbesondere mittels des vorgenannten Regelkreises 29 (Fig. 7). Dies wird beispielhaft nachfolgend anhand der Figuren 5 und 6 näher erläutert, die in einer vergleichenden Gegenüberstellung eine Verstellkurve 70 einer Heißformgebungsvorrichtung gemäß der vorliegenden Erfindung und eine Verstellkurve 71 einer Heißformgebungsvorrichtung gemäß dem Stand der Technik zeigen.

Der Fig. 5 kann man entnehmen, dass die Zeit x zum Schwenken eines Drehtisches gemäß der Erfindung aufgrund der geringeren zu bewegenden Massen kleiner sein kann als die Zeit Z zum Schwenken eines Drehtisches nach dem Stand der Technik. Gerade bei sehr hohen Taktraten kann so erfindungsgemäß die Stillstandszeit S im Verhältnis zur Zeit Z zum Schwenken länger sein.

Das vorgenannte Verhältnis wird in der Regel für diese Art von Heißformgebungsvorrichtungen in Winkelgrad ausgedrückt. Ein üblicher Wert nach dem Stand der Technik liegt bei 90° - 100° für die Schwenkung (Z) und somit 360° - 100° = 260° für den Stillstand (S) zwischen zwei Schwenkungen. Eine entsprechende Winkeldarstellung ist in der Fig. 6 für eine Verstellkurve einer Heißformgebungsvorrichtung gemäß der vorliegenden Erfindung und für eine Verstellkurve einer Heißformgebungsvorrichtung gemäß dem Stand der Technik dargestellt. Deutlich erkennbar ist, dass die Zeitdifferenz ΔK mit zunehmender Anzahl von Schwenkungen immer mehr ansteigt.

Nach dem Stand der Technik können in der Regel die mechanisch möglichen Taktraten nicht genutzt werden, weil die Stillstandszeit (Bearbeitungszeit am Glas) bei hohen Taktraten zu kurz wird und somit eine prozesstechnische Begrenzung eintritt. Das beschriebene Antriebskonzept nach der vorliegenden Erfindung zeigte dagegen an einem Prototyp bis zu hohen Taktraten, die mit herkömmlichen Heißformgebungsvorrichtungen nicht erreicht werden konnten, sehr harmonische Bewegungen, welche zudem über Regelalgorithmen optimiert werden können. Die reduzierte Schwenkzeit X des erfindungsgemäßen Antriebskonzeptes konnte auch variabel gewählt werden (X/S=var) und konnte über den ganzen Frequenzbereich konstant gefahren werden, mit sehr geringer Neigung zu Schwingungen im mechanischen Aufbau.

Im Gegensatz zum Stand der Technik ist mit obiger Antriebstechnik die Frequenz der Schwenkung von einer Position zur nächsten nicht aufgrund einer großen zu rotierenden Masse (Getriebe, Träger bzw. Säule und Drehtisch) und der daraus folgenden mechanischen Belastung des Getriebes (Beschleunigen und Bremsen zur Positionierung) limitiert. Getriebe, die ein Spiel zwischen den Bauteilen (z.B. Zahnräder oder mechanische Kurven und Rollen) bedingen, sind erfindungsgemäß im Antriebsstrang nicht notwendig, was zu einer längeren Lebensdauer der Drehlagerung aufgrund einer geringeren Belastung führt und auch die Winkelpositioniergenauigkeit parallel zum Arbeitstisch verbessert. Weil der Wirkungsort der Werkzeuge am Glasrohr oder am halbfertigen Zwischenprodukt auf einem relativ großen Durchmesser liegt (Aufgrund vieler Spannfutter), aber der Durchmesser der Drehlager bei dem erfindungsgemäßen Antriebskonzept relativ groß gewählt werden kann, multiplizieren sich Fehler im Gegensatz zum Stand der Technik nicht weiter, was eine höhere Qualität des Endprodukts bedingt.

Die Lagerung des Direktantriebsmotors kann in einen Maschinengestell-Abschnitt, insbesondere in einen Träger, wie vorstehend ausgeführt, oder in eine Säule, mit vergleichsweise großem Durchmesser integriert werden oder kann unmittelbar an dem Maschinengestell-Abschnitt bzw. an der Säule vorgesehen sein, beispielsweise auf einem Umfangsvorsprung auf der Außenseite einer jeweiligen Säule. Weil das Lager oberhalb des Arbeitstisches angebracht ist, ist der Höhenunterschied zwischen der Lagerung und dem Eingriffspunkt der zur Heißumformung/Bearbeitung verwendeten Werkzeuge (Arbeitsebene) bzw. zwischen der Lagerung und der Höhe des Übergabepunktes des halbfertigen Zwischenprodukts von der Muttermaschine zu einer nachgeordneten Bodenmaschine gering oder gar verschwindend, was in einer höheren Steifigkeit der Antriebsanordnung und einer höheren Präzision bei der Bearbeitung oder Heißformgebung resultiert.

### Bezugszeichenliste

- 1: Heißformgebungsvorrichtung

- 10: Muttermaschine / Hauptkranz
- 11: Maschinengestell-Abschnitt / Säule oder Träger
- 12: Drehtisch
- 14: Gasbrenner
- 15: Übergabebereich
- 16: Haltefutter
- 17: Arbeitsebene (Muttermaschine)
- 18: Trennebene

- 20: Drehachse Hauptkranz
- 21: Torquemotor
- 22: Rotor
- 23: Stator
- 24: Drehlager
- 25: Halte- und Positionierungsblock
- 26: Werkzeug

- 28: Sensor zur Bestimmung einer Drehstellung
- 29: Regelkreis
- 29': Nachschlagetabelle
- 30: Bodenmaschine
- 31: Säule oder Träger
- 32: Drehtisch
- 34: Gasbrenner

- 36: Haltefutter
- 37: Arbeitsebene (Bodenmaschine)

- 40: Drehachse
- 41: Torquemotor
- 42: Rotor
- 43: Stator
- 44: Drehlager

- 50: Arbeitstisch
- 50': zusätzliche Halteplatte für Bodenmaschine (Höhenverstellbar)
- 51: Gestell

- 60: Glasrohr / Werkstück
- 61: Zwischenprodukt / Werkstück

- 70: Verstellkurve nach der Erfindung
- 71: Verstellkurve nach dem Stand der Technik

### Zum Stand der Technik

- 100: Muttermaschine
- 101: Drehturm
- 102: Drehtisch
- 103: Verbindungsstrebe
- 104: Gasbrenner
- 105: Übergabebereich
- 106: Haltefutter

- 110: Antriebsmotor
- 111: Getriebe
- 112: Lager
- 113: Abtriebsflansch

- 115: Halte- und Positionierungsblock
- 116: Werkzeug

- 130: Bodenmaschine
- 131: Drehturm
- 132: Drehtisch
- 133: Verbindungsstrebe
- 134: Gasbrenner
- 136: Haltefutter

- 140: Antriebsmotor
- 141: Getriebe
- 142: Lager
- 143: Abtriebsflansch

- 149: Motorkopplung
- 150: Arbeitstisch
- 151: Gestell

- 160: Glasrohr
- 161: Zwischenprodukt

- A, A': Abstand Drehlager zu Arbeitsebene gemäß der Erfindung
- B1 ... BN: Bearbeitungsstationen
- D: Lagerdurchmesser
- H: Abstand Drehlager zu Arbeitsebene nach dem Stand der Technik
- S: Stillstandszeit eines Drehtisches
- W: Wirkdurchmesser
- W2: Winkelspiel
- X: Zeit zum Schwenken eines Drehtisches gemäß der Erfindung
- Y: Taktzeit
- Z: Zeit zum Schwenken eines Drehtisches nach dem Stand der Technik

- ΔK: Zeitdifferenz (bei einer vollen Umdrehung des Drehtisches)

## Patentansprüche

1. Heißformgebungsvorrichtung zur Herstellung von Glasbehältnissen aus einem Glasrohr, mit einem Drehtisch (12, 23), der drehbeweglich an einem zugeordneten Maschinengestell-Abschnitt (11, 31) gelagert ist, wobei
über den Umfang des Drehtischs (12, 32) mehrere Haltefutter (16, 36) zum Halten von Werkstücken (60, 61) verteilt angeordnet sind,
der Drehtisch (12, 32) mit einem Antriebsmotor (21, 41) gekoppelt ist, um eine Drehbewegung des Drehtischs (12, 32) anzutreiben, und
der Antriebsmotor (21, 41) als Direktantrieb ausgebildet ist, sodass der Drehtisch (12, 32) mit dem zugeordneten Maschinengestell-Abschnitt (11, 31) direkt und ohne Zwischenschaltung eines Getriebes verbunden ist;
**dadurch gekennzeichnet, dass** der zugeordnete Maschinengestell-Abschnitt als Träger (11, 31) ausgebildet ist, der feststehend auf einem Arbeitstisch (50, 50') angeordnet ist, wobei der Stator (23, 43) des Direktantriebs (21, 41) im oberen Bereich des zugeordneten Trägers (11, 31) angeordnet ist und der Rotor (22, 42) des Direktantriebs (21, 41) an dem Drehtisch (12, 32) vorgesehen ist.

2. Heißformgebungsvorrichtung nach Anspruch 1, wobei der Direktantrieb einen Torquemotor (21, 42) mit einer hohen Polpaaranzahl umfasst, bevorzugt mit einer Polpaaranzahl von größer als 20.

3. Heißformgebungsvorrichtung nach einem der vorhergehenden Ansprüche, wobei der Rotor (22, 42) des Torquemotors (21, 41) als zylindrischer oder polyedrischer Fortsatz ausgebildet ist, der senkrecht von einer Unterseite des Drehtisches (12, 32) vorsteht und in den oberen Bereich des zugeordneten Trägers (11, 31) hineinragt.

4. Heißformgebungsvorrichtung nach einem der vorhergehenden Ansprüche, wobei der Stator (23, 43) des Torquemotors (21, 41) in einer Umfangsaussparung oder in mehreren Ausnehmungen im oberen Bereich des zugeordneten Trägers (11, 31) angeordnet ist.

5. Heißformgebungsvorrichtung nach einem der vorhergehenden Ansprüche, wobei an dem zugeordneten Maschinengestell-Abschnitt (11, 31) ein Drehlager (24, 44) in einer Umfangsaussparung im oberen Bereich des zugeordneten Trägers (11, 31) vorgesehen ist, wobei ein vertikaler Abstand (A) des Drehlagers (24, 44) zu einer Arbeitsebene (17, 37) des jeweiligen Drehtischs (12, 32) maximal 40 cm beträgt, bevorzugter maximal 20 cm beträgt und noch bevorzugter im Bereich zwischen 3 cm und 15 cm liegt.

6. Heißformgebungsvorrichtung nach einem der vorhergehenden Ansprüche, wobei dem Antriebsmotor (21, 42) ein Sensor (28) zum Erfassen einer Drehstellung des Drehtisches (12, 23) zugeordnet ist.

7. Heißformgebungsvorrichtung nach Anspruch 6, wobei der Sensor (28) im Bereich des Drehlagers (24, 44) des zugeordneten Maschinengestell-Abschnitts (11, 31) angeordnet ist.

8. Heißformgebungsvorrichtung nach Anspruch 6 oder 7, wobei dem Sensor (28) eine Regelschaltung (29) zugeordnet ist, die eine von dem Sensor erfasste Drehstellung des Drehtisches (12, 23) weiterverarbeitet und eine Bewegung des Antriebsmotors (21, 42) in Entsprechung zu zumindest einem einstellbaren Sollwert regelt, wobei der zumindest eine einstellbare Sollwert bevorzugt in einer Nachschlagetabelle (29') gespeichert ist, die mit der Regelschaltung (29) verbunden ist.

9. Heißformgebungsvorrichtung nach einem der vorhergehenden Ansprüche, wobei der Drehtisch (12) schrittweise Drehbewegungen mit einer konstanten Taktrate ausführt, wobei das Verhältnis einer Zeit (Z) zum Schwenken des Drehtisches (12) zu einer neuen Arbeitsposition und einer Stillstandszeit (S), während der der Drehtisch (12) an der neuen Arbeitsposition verbleibt, variabel einstellbar ist.

10. Heißformgebungsvorrichtung nach einem der vorhergehenden Ansprüche, wobei der Träger als Säule mit einem kreisrunden Querschnitt ausgebildet ist, der sich senkrecht zu dem Arbeitstisch (50, 50') erstreckt.

11. Heißformgebungsvorrichtung nach einem der vorhergehenden Ansprüche,
mit einem ersten Drehtisch (12) und zumindest einem zweiten Drehtisch (32), der mit einem Antriebsmotor (41) gekoppelt ist, der insbesondere als Direktantrieb ausgebildet ist, wobei die Drehtische (12, 32) schrittweise Drehbewegungen mit einer konstanten Taktrate um die zugeordneten Maschinengestell-Abschnitte (11, 31) ausführen, wobei Bewegungsbahnen des ersten Drehtisches (12) und des zweiten Drehtisches (32) sich an einer Stelle überschneiden, an der die Übergabe eines Werkstückes (60) von einem Haltefutter (16) des ersten Drehtisches (12) an ein Haltefutter (36) des zweiten Drehtisches (32) erfolgt, wobei an diskreten Arbeitspositionen entlang der Bewegungsbahnen des ersten und zweiten Drehtisches (12, 32) Bearbeitungswerkzeuge (26) und Gasbrenner (14, 34) zur Bearbeitung und Heißformgebung der Glasbehältnisse angeordnet sind.

12. Heißformgebungsvorrichtung nach Anspruch 11, wobei die zugeordneten Maschinengestell-Abschnitte als Träger (11, 31) ausgebildet sind, die feststehend auf einem Arbeitstisch (50, 50') angeordnet sind, wobei die Antriebsmotoren (21, 42) koaxial zum jeweils zugeordneten Träger(11, 31) angeordnet sind und wobei die Träger (11, 31) auf unterschiedlichen Höhenniveaus angeordnet sind.

13. Heißformgebungsvorrichtung nach Anspruch 12, wobei sich das obere Ende des dem zweiten Drehtisch (32) zugeordneten Trägers (31) durch eine Öffnung in einem Arbeitstisch (50) erstreckt, auf dem der dem ersten Drehtisch (12) zugeordnete Träger (11) feststehend angeordnet ist.

14. Heißformgebungsvorrichtung nach einem der vorhergehenden Ansprüche, wobei der Träger als Säule mit einem kreisrunden Querschnitt ausgebildet ist, der sich senkrecht zu dem Arbeitstisch (50, 50') erstreckt.

## Claims

1. A hot forming device for producing glass containers from a glass tube, having a turntable (12, 23), which is rotatably mounted on an associated machine frame section (11, 31), wherein
a plurality of holding chucks (16, 36) for holding workpieces (60, 61) is arranged in a manner such as to be distributed over the circumference of the turntable (12, 32),
the turntable (12, 32) is coupled to a drive motor (21, 41) in order to drive a rotary motion of the turntable (12, 32), and
the drive motor (21, 41) is designed as a direct drive, such that the turntable (12, 32) is connected to the associated machine frame section (11, 31) directly and without the interposition of a transmission;
**characterized in that** the associated machine frame section is designed as a support (11, 31), which is fixedly arranged on a worktable (50, 50'), wherein the stator (23, 43) of the direct drive (21, 41) is arranged in an upper region of the associated support (11, 31), and the rotor (22, 42) of the direct drive (21, 41) is provided on the turntable (12, 32).

2. The hot forming device as claimed in claim 1, wherein the direct drive comprises a torque motor (21, 42) with a high number of pole pairs, preferably with a number of pole pairs greater than 20.

3. The hot forming device as claimed in any one of the preceding claims, wherein the rotor (22, 42) of the torque motor (21, 41) is designed as a cylindrical or polyhedral extension, which extends perpendicularly from a lower side of the turntable (12, 32) and projects into the upper region of the associated support (11, 31).

4. The hot forming device as claimed in any one of the preceding claims, wherein the stator (23, 43) of the torque motor (21, 41) is arranged in a circumferential aperture or in a plurality of recesses in the upper region of the associated support (11, 31).

5. The hot forming device as claimed in any one of the preceding claims, wherein a rotary bearing (24, 44) is provided on the associated machine frame section (11, 31), in a circumferential aperture in the upper region of the associated support (11, 31), wherein a vertical distance (A) between the rotary bearing (24, 44) and a working plane (17, 37) of the respective turntable (12, 32) is at most 40 cm, more preferably at most 20 cm, and even more preferably in a range of between 3 cm and 15 cm.

6. The hot forming device as claimed in any one of the preceding claims, wherein a sensor (28) for detecting a rotational position of the turntable (12, 23) is assigned to the drive motor (21, 42) .

7. The hot forming device as claimed in claim 6, wherein the sensor (28) is arranged in the region of the rotary bearing (24, 44) of the associated machine frame section (11, 31).

8. The hot forming device as claimed in claim 6 or 7, wherein a control circuit (29), which processes a rotational position of the turntable (12, 23) detected by the sensor and controls a movement of the drive motor (21, 42) so as to correspond to at least one adjustable setpoint, is assigned to the sensor (28), wherein the at least one adjustable setpoint is preferably stored in a lookup table (29'), which is connected to the control circuit (29).

9. The hot forming device as claimed in any one of the preceding claims, wherein the turntable (12) performs stepwise rotary movements at a constant clock rate, wherein the ratio of a time (Z) for pivoting the turntable (12) into a new working position and a standstill time (S), during which the turntable (12) remains at the new working position, can be set variably.

10. The hot forming device as claimed in any one of the preceding claims, wherein the support is designed as a column with a circular cross section, which extends perpendicularly to the worktable (50, 50').

11. The hot forming device as claimed in any one of the preceding claims, having a first turntable (12) and at least one second turntable (32), which is coupled to a drive motor (41), which is, in particular, designed as a direct drive, wherein the turntables (12, 32) perform stepwise rotary movements around the associated machine frame sections (11, 31) at a constant clock rate, wherein paths of motion of the first turntable (12) and of the second turntable (32) intersect at a point at which the transfer of a workpiece (60) from a holding chuck (16) of the first turntable (12) to a holding chuck (36) of the second turntable (32) takes place, wherein machining tools (26) and gas burners (14, 34) for machining and hot forming the glass containers are arranged at discrete working positions along the paths of motion of the first and the second turntable (12, 32).

12. The hot forming device as claimed in claim 11, wherein the associated machine frame sections are designed as supports (11, 31), which are fixedly arranged on a worktable (50, 50'), wherein the drive motors (21, 42) are arranged coaxially with the respectively associated support (11, 31) and wherein the supports (11, 31) are arranged at different vertical levels.

13. The hot forming device as claimed in claim 12, wherein the upper end of the support (31) associated with the second turntable (32) extends through an opening in a worktable (50), upon which the support (11) associated with the first turntable (12) is fixedly arranged.

14. The hot forming device as claimed in any one of the preceding claims, wherein the support is designed as a column with a circular cross section, which extends perpendicularly to the worktable (50, 50').

## Revendications

1. Dispositif de formage à chaud destiné à la fabrication de contenants en verre à partir d'un tube de verre, avec une table tournante (12, 23) qui est supportée de façon mobile en rotation sur un tronçon de bâti de machine (11, 31) associé,
plusieurs mandrins de retenue (16, 36) étant disposés de façon répartie sur la circonférence de la table tournante (12, 32) pour retenir des pièces (60, 61),
la table tournante (12, 32) étant couplée à un moteur d'entraînement (21, 41) pour entraîner un mouvement de rotation de la table tournante (12, 32), et
le moteur d'entraînement (21, 41) étant constitué en tant qu'entraînement direct, de sorte que la table tournante (12, 32) est raccordée directement au tronçon de bâti de machine (11, 31) associé et sans interposition d'une transmission ;
**caractérisé en ce que** le tronçon de bâti de machine associé est constitué en tant que support (11, 31) qui est disposé de façon fixe sur une table de travail (50, 50'), le stator (23, 43) de l'entraînement direct (21, 41) étant disposé dans la zone supérieure du support (11, 31) associé, et le rotor (22, 42) de l'entraînement direct (21, 41) étant prévu sur la table tournante (12, 32).

2. Dispositif de formage à chaud selon la revendication 1, l'entraînement direct comprenant un moteur couple (21, 42) ayant un nombre de paires de pôles élevé, de préférence avec un nombre de paires de pôles supérieur à 20.

3. Dispositif de formage à chaud selon l'une des revendications précédentes, le rotor (22, 42) du moteur couple (21, 41) étant constitué en tant que prolongement cylindrique ou polyédrique qui dépasse perpendiculairement d'une partie inférieure de la table tournante (12, 32) et fait saillie à l'intérieur de la zone supérieure du support (11, 31) associé.

4. Dispositif de formage à chaud selon l'une des revendications précédentes, le stator (23, 43) du moteur couple (21, 41) étant disposé dans un évidement périphérique ou dans plusieurs creux dans la zone supérieure du support (11, 31) associé.

5. Dispositif de formage à chaud selon l'une des revendications précédentes, un palier tournant (24, 44) étant prévu sur le tronçon de bâti de machine (11, 31) associé dans un évidement périphérique dans la zone supérieure du support (11, 31) associé, une distance verticale (A) du palier tournant (24, 44) à un plan de travail (17, 37) de la table tournante (12, 32) respective étant au maximum égale à 40 cm, de façon plus préférentielle au maximum égale à 20 cm et de de façon encore plus préférentielle comprise dans une plage de 3 cm à 15 cm.

6. Dispositif de formage à chaud selon l'une des revendications précédentes, un capteur (28) étant associé au moteur d'entraînement (21, 42) pour la détection d'une position de rotation de la table tournante (12, 23).

7. Dispositif de formage à chaud selon la revendication 6, le capteur (28) étant disposé dans la zone du palier tournant (24, 44) du tronçon de bâti de machine (11, 31) associé.

8. Dispositif de formage à chaud selon la revendication 6 ou 7, un circuit de régulation (29) étant associé au capteur (28), lequel circuit continue à traiter une position de rotation de la table tournante (12, 23) qui a été détectée par le capteur et régule un mouvement du moteur d'entraînement (21, 42) conformément à au moins une valeur de consigne réglable, l'au moins une valeur de consigne réglable étant enregistrée de préférence dans une table de consultation (29') qui est raccordée au circuit de régulation (29).

9. Dispositif de formage à chaud selon l'une des revendications précédentes, la table tournante (12) exécutant par étapes des mouvements de rotation à une cadence constante, le rapport d'un temps (Z) de pivotement de la table tournante (12) vers une nouvelle position de travail et d'un temps d'arrêt (S) pendant lequel la table tournante (12) demeure à la nouvelle position de travail étant réglable de façon variable.

10. Dispositif de formage à chaud selon l'une des revendications précédentes, le support étant constitué en tant que colonne ayant une section transversale circulaire qui s'étend perpendiculairement à la table de travail (50, 50').

11. Dispositif de formage à chaud selon l'une des revendications précédentes, avec une première table tournante (12) et au moins une deuxième table tournante (32) qui est couplée à un moteur d'entraînement (41) qui est constitué en particulier en tant qu'entraînement direct, les tables tournantes (12, 32) exécutant par étapes des mouvements de rotation à une cadence constante autour des tronçons de bâti de machine (11, 31) associés, des trajectoires de la première table tournante (12) et de la deuxième table tournante (32) se recoupant en un endroit où s'effectue la remise d'une pièce (60) à partir d'un mandrin de retenue (16) de la première table tournante (12) à un mandrin de retenue (36) de la deuxième table tournante (32), des outils d'usinage (26) et des chalumeaux (14, 34) destinés à l'usinage et au formage à chaud des contenants en verre étant disposés dans des positions de travail discrètes le long des trajectoires de la première et de la deuxième table tournante (12, 32).

12. Dispositif de formage à chaud selon la revendication 11, les tronçons de bâti de machine associés étant constitués en tant que supports (11, 31) qui sont disposés de façon fixe sur une table de travail (50, 50'), les moteurs d'entraînement (21, 42) étant disposés de façon coaxiale au support (11, 31) respectivement associé, et les supports (11, 31) étant disposés à des niveaux de hauteur différents.

13. Dispositif de formage à chaud selon la revendication 12, l'extrémité supérieure du support (31) associé à la deuxième table tournante (32) s'étendant à travers un orifice dans une table de travail (50) sur laquelle le support (11) associé à la première table tournante (12) est disposé de façon fixe.

14. Dispositif de formage à chaud selon l'une des revendications précédentes, le support étant constitué en tant que colonne ayant une section transversale circulaire qui s'étend perpendiculairement à la table de travail (50, 50').
